# FASCICULE DE BREVET EUROPEEN

(11) **EP 2 316 608 B1**
(45) Date de publication et mention de la délivrance du brevet: **06.06.2012**
(21) Numéro de dépôt: 10189454.1
(22) Date de dépôt: 29.10.2010
(51) Int. Cl.: B23P 19/04, E04F 21/00

(54) **Installation et procédé de pose en reprise d'une ou plusieurs garnitures d'étanchéité sur des profilés.**
Anlage und Verfahren zum Einbringen eines oder mehrerer Dichtungselemente auf Profilen
Installation and method for applying one or more sealing elements on profiles

(30) Priorité: 02.11.2009 FR 0905240
(43) Date de publication de la demande: 04.05.2011
(73) Titulaire: HUTCHINSON, 75008 Paris (FR); Aluminium Building Developpement, 38590 Saint Etienne de Saint Geoirs (FR)
(72) Inventeur: Boiron, Guy, 38140 Apprieu (FR); Pelade, Claude, 38120 Saint Egreve (FR); Serpinet, Christophe, 38690 Le Grand Lemps (FR); Joubert, Frédéric, 38500 Coublevie (FR); Giraud, Alain, 38140 Apprieu (FR); Guillaud, Françoise, 38140 Apprieu (FR); Chatel, Loïc, 38590 Brezins (FR)
(74) Mandataire: Bolinches, Michel Jean-Marie

(56) Documents cités:
- EP-A1- 1 300 528
- DE-A1- 3 405 512
- US-A- 3 295 195
- US-A- 5 103 547
- US-B1- 6 736 921

## Description

La présente invention concerne une installation et un procédé de pose en reprise d'une ou plusieurs garnitures d'étanchéité sur des profilés présentant chacun une ou plusieurs gorges réceptrices respectivement destinées à recevoir la ou les garnitures selon les préambules des revendications 1 et 14. Une telle installation et un tel procédé sont décrits dans le document US-A-3 295 195. L'invention s'applique en particulier à la pose d'au moins une garniture selon une direction s'écartant de la direction verticale (i.e. autrement que sur le dessus ou sur le dessous) et à la pose simultanée et multidirectionnelle de plusieurs garnitures, incluant cette pose dans une direction non verticale.

Les installations de pose de garnitures d'étanchéité sur des barres ou profilés extrudés sont connues de longue date. On peut par exemple se référer au document de Brevet US-A-3 295 195 et, plus récemment, au document US-B1-6 736 921 pour la description de telles installations qui sont conçues pour clipper (i.e. pour enfoncer par un coincement) la ou chaque garniture via des galets presseurs dans le fond d'une gorge réceptrice de chaque profilé.

Il existe actuellement sur le marché des installations de pose en reprise d'une ou de deux garnitures d'étanchéité sur des profilés qui sont acheminés horizontalement vers une ou plusieurs unités de pose dans une direction d'avancement longitudinale par rapport à ces profilés. Par « installation de pose en reprise », on entend de manière connue une installation à fonctionnement autonome dont le mouvement d'avancée des profilés est totalement indépendant de celui lié à leur extrusion, contrairement à l'installation en continu divulguée dans le document précité US-B1-6 736 921 où l'avancée des profilés est dépendante de leur processus d'extrusion. Ces installations connues de pose en reprise sont conçues pour clipper la ou chaque garniture toujours selon une direction verticale de pose pouvant s'effectuer par-dessus et/ou par-dessous chaque profilé. On peut par exemple citer des unités de pose, telles que celle commercialisée par la société Lemuth sous la dénomination « DAGL 110 », qui permettent d'insérer verticalement deux garnitures respectivement sur les faces supérieure et inférieure de chaque profilé convoyé.

Un inconvénient majeur des installations connues de pose en reprise réside dans le fait qu'elles ne permettent la pose de garnitures sur les profilés que selon une unique direction verticale, ce qui ne les rend donc pas *a priori* adaptées pour la pose automatique de garnitures avec un angle variable par rapport à cette direction verticale ni, *a fortiori,* pour la pose simultanée de plusieurs garnitures dont l'une requiert une direction de pose non verticale du fait de la localisation particulière de la gorge.

D'une manière générale, un autre inconvénient de ces installations connues de pose en reprise réside dans leur fiabilité qui peut parfois laisser à désirer en termes de reproductibilité du positionnement des galets presseurs pour obtenir un clippage pérenne des garnitures dans les gorges correspondantes de chaque profilé.

Un but de la présente invention est de proposer une installation de pose en reprise d'une ou plusieurs garnitures d'étanchéité sur des profilés présentant chacun une ou plusieurs gorges réceptrices respectivement destinées à recevoir la ou les garnitures, cette installation permettant de remédier notamment à ce dernier inconvénient et comprenant :
- des convoyeurs amont et aval respectivement destinés à acheminer dans une direction horizontale Z chaque profilé à équiper de la ou des garnitures et chaque profilé ainsi équipé,
- des moyens d'acheminement aptes à diriger dans ladite direction Z la ou chaque garniture vers chaque profilé à équiper, et
- au moins une unité de pose de la ou l'une des garnitures sur chaque profilé qui est agencée entre ces convoyeurs et qui comprend :
   * des moyens d'enfoncement de la garniture correspondante dans la gorge de chaque profilé, et
   * des moyens de guidage de la garniture correspondante vers ces moyens d'enfoncement en amont desquels ils sont agencés.

A cet effet, une installation selon l'invention est telle que ladite au moins une unité de pose comprend un chariot qui est mobile selon une direction X horizontale transversale perpendiculaire à ladite direction Z, ce chariot portant à la fois lesdits moyens de guidage, lesdits moyens d'enfoncement et des moyens de centrage transversal agencés en amont des moyens de guidage et conçus pour positionner automatiquement ces moyens de guidage et d'enfoncement au droit de la gorge correspondante de chaque profilé.

L'objet de l'invention est atteint avec une installation comportant les caractéristiques de la revendication 1 et avec un procédé comportant les caractéristiques de la revendication 14. Des mises en oeuvre préférées de l'installation et du procédé sont décries dans les revendications dépendantes.

On notera que ces moyens de centrage transversal permettent d'améliorer d'une manière significative la fiabilité de la pose de la ou des garnitures sur chaque profilé, en garantissant notamment la reproductibilité de l'alignement des moyens de guidage et du ou de chaque galet presseur dans l'axe de la gorge correspondante de chaque profilé, et donc la qualité et la pérennité de la liaison entre gamiture(s) et profilés.

Selon une autre caractéristique de l'invention, dans ladite au moins une unité de pose :
- lesdits moyens d'enfoncement peuvent comporter au moins un galet presseur,
- lesdits moyens de guidage peuvent définir au moins un canal de passage pour la garniture correspondante débouchant sur la périphérie de ce galet presseur, et
- lesdits moyens de centrage peuvent comporter un galet ou sabot de centrage, ces moyens d'enfoncement, de guidage et de centrage étant chacun conçus pour évoluer dans un plan perpendiculaire à ladite direction Z lors du déplacement dudit chariot et étant réglables dans la direction verticale Y dans une position transversale donnée de ce chariot.

Selon un autre aspect de l'invention qui permet notamment de remédier à l'inconvénient majeur précité des installations connues de pose en reprise lié à leur pose exclusivement verticale, dans ladite au moins une unité de pose, les axes respectifs dudit au moins un galet presseur et dudit galet de centrage sont montés mobiles sur ledit chariot en étant aptes à former différents angles avec la direction horizontale transversale X dans une position fixe donnée de ce chariot, cette unité de pose étant ainsi multidirectionnelle en étant apte à insérer la garniture correspondante suivant une direction d'insertion réglable s'écartant de la direction verticale selon un angle variable par exemple compris entre 0° et 90°.

On notera que cette unité de pose multidirectionnelle permet ainsi d'insérer au moins une garniture dans la gorge correspondante de chaque profilé quelle que soit la localisation de cette gorge, et en particulier dans le cas de gorges latérales requérant une direction de pose sensiblement horizontale ou oblique.

Selon une autre caractéristique de l'invention, dans ladite unité de pose multidirectionnelle, ledit au moins un galet presseur, lesdits moyens de guidage et ledit galet de centrage peuvent être solidaires d'un support monté coulissant sur une coulisse courbe dudit chariot, de telle sorte que lesdits axes basculent lors du coulissement de ce support suivant des angles variant progressivement par rapport à ladite direction X.

Avantageusement, ladite coulisse peut comprendre deux guides en arc de cercle juxtaposés dans ladite direction Z de manière concentrique et définissant ensemble une piste curviligne sur laquelle ledit support coulissant est guidé de préférence de manière continue par l'intermédiaire d'au moins un train de galets de guidage dont il est pourvu.

Egalement avantageusement, dans ladite unité de pose multidirectionnelle, ledit chariot peut supporter une potence qui est mobile en translation verticale dans ladite direction Y et qui porte ladite coulisse, ce chariot étant monté mobile en translation dans ladite direction X sur une poutre transversale à ladite direction Z.

Encore plus avantageusement, ledit support coulissant peut être pourvu, à titre de moyens d'enfoncement, de deux galets presseurs respectivement amont et aval par rapport à ladite direction Z qui sont reliés entre eux par une courroie crantée montée sur des poulies solidaires en rotation de ces galets, de telle sorte que le galet presseur amont soit entraîné à une vitesse périphérique supérieure à celle du galet presseur aval selon un rapport de démultiplication adapté ne générant pas d'allongement de la garniture dû à l'effort d'enfoncement de cette dernière dans la gorge.

De préférence, ladite installation comporte en outre, en vis-à-vis de ladite unité de pose multidirectionnelle :
- des galets d'entraînement de chaque profilé dans ladite direction Z qui présentent des axes horizontaux parallèles à ladite direction X,
- des galets de positionnement transversal de chaque profilé qui sont mobiles dans la direction X et qui présentent des axes verticaux, et
- au moins un galet d'appui qui est agencé en amont dudit chariot pour plaquer chaque profilé vers lesdits galets d'entraînement et qui présente un axe horizontal parallèle à ladite direction X, ce galet d'appui étant mobile dans lesdites directions X et Y.

Selon un mode préférentiel de réalisation de l'invention, ladite installation comporte, en plus de ladite unité de pose multidirectionnelle, au moins une autre unité de pose verticale d'une autre des garnitures sur une autre gorge de chaque même profilé à équiper, ladite ou chaque unité de pose verticale étant montée sur un autre chariot mobile dans ladite direction transversale X et étant conçue pour insérer la garniture correspondante suivant une direction d'insertion verticale Y.

Avantageusement, dans ladite ou chaque unité de pose verticale, lesdits moyens de guidage peuvent définir deux canaux de passage pour une garniture à insérer respectivement sur ou sous chaque profilé, chaque canal étant sensiblement aligné dans ladite direction Z avec ledit galet de centrage en amont et avec ledit galet presseur en aval.

De préférence, ladite ou chaque unité de pose verticale comporte en outre des moyens de mesure et de transmission pour mesurer la vitesse d'avancement de chaque profilé y défilant et pour transmettre en réponse audit galet presseur un mouvement de rotation selon un rapport de démultiplication adapté de sorte à ne pas générer d'allongement intempestif de la garniture dû à l'effort d'enfoncement de cette dernière dans la gorge.

A titre encore plus préférentiel, lesdits moyens de mesure et de transmission comportent un palonnier en forme de « V » monté pivotant par sa pointe en un pivot sensiblement coaxial dans ladite direction transversale X avec l'axe dudit galet presseur, ce palonnier portant aux extrémités de ses deux branches deux galets de mesure supérieur et inférieur qui sont respectivement destinés à être actionnés en contact avec le dessus ou le dessous de chaque profilé, respectivement dans le cas d'une pose par-dessus ou par dessous, par pivotement de ce palonnier sur ce pivot et qui sont aptes à mesurer la vitesse d'avancement de chaque profilé et à entraîner en réponse ledit galet presseur par l'intermédiaire d'une courroie crantée et d'un tendeur équipant ce palonnier.

Selon une autre caractéristique de l'invention, ladite ou chaque unité de pose verticale peut être suspendue sur un amortisseur par exemple pneumatique pour la positionner à la hauteur souhaitée dans la direction verticale.

Avantageusement, ladite installation selon l'invention peut comporter, en plus de ladite unité de pose multidirectionnelle, deux desdites unités identiques de pose verticale qui sont conçues pour être disposées transversalement de part et d'autre de chaque profilé à équiper, de telle sorte que ces trois unités de pose soient aptes à insérer simultanément trois garnitures dans trois gorges respectives de chaque profilé, deux de ces garnitures étant posées verticalement et la troisième selon un angle donné avec la direction verticale qui est compris entre 0° et 90°.

Un procédé de pose en reprise selon l'invention d'une ou plusieurs garnitures d'étanchéité sur des profilés présentant chacun une ou plusieurs gorges réceptrices respectivement destinées à recevoir la ou les garnitures, comprend :
- un convoyage des profilés à équiper de la ou des garnitures et des profilés ainsi équipés dans une direction horizontale Z,
- un acheminement de la ou chaque garniture vers chaque profilé à équiper, et
- une pose de la ou de l'une des garnitures sur chaque profilé par un guidage puis un enfoncement de la garniture correspondante dans la gorge de chaque profilé.

Selon l'invention, ce procédé de pose est tel que l'on positionne au moins une unité de pose selon une direction horizontale transversale X perpendiculaire à ladite direction Z, puis tel que l'on réalise avant ce guidage un centrage transversal de la pose pour que ce guidage puis cet enfoncement soient effectués automatiquement au droit de la gorge correspondante de chaque profilé.

Selon un autre aspect de l'invention, ce procédé de pose peut consister à utiliser une installation incluant une unité de pose multidirectionnelle telle que présentée ci-dessus pour réaliser une insertion automatique de l'une au moins de ces garnitures selon une direction de pose sensiblement horizontale ou oblique qui s'écarte de la direction verticale d'un angle réglable.

Avantageusement, l'on peut ainsi insérer simultanément trois garnitures dans trois gorges respectives de chaque profilé, deux de ces garnitures étant posées verticalement respectivement par-dessus et par-dessous et la troisième garniture étant posée latéralement selon ledit angle réglable avec la direction verticale.

Egalement avantageusement, l'on peut en particulier utiliser des garnitures dont le module d'élasticité à 100 % est inférieur ou égal à 2 MPa.

D'autres caractéristiques, avantages et détails de la présente invention ressortiront à la lecture de la description suivante d'un exemple de réalisation de l'invention, donné à titre illustratif et non limitatif, ladite description étant réalisée en référence avec les dessins joints, parmi lesquels :
la figure 1 est une vue en perspective arrière d'une installation de pose en reprise selon l'invention à trois unités de pose dont l'une est à pose multidirectionnelle et dont les deux autres sont à pose verticale,
la figure 2 est une vue partielle en perspective avant de l'installation de la figure 1,
la figure 3 est une vue de côté partielle de l'installation des figures 1 et 2,
la figure 4 est une vue avant partielle de l'installation des figures 1 et 2 montrant schématiquement un profilé entre les deux unités de pose verticale,
la figure 5 est une vue de détail en perspective latérale de l'unité de pose multidirectionnelle visible à la figure 2,
la figure 6 est une vue latérale schématique des constituants essentiels de cette unité de pose multidirectionnelle selon l'invention, où sont également illustrés un profilé et une garniture d'étanchéité qui y est guidée,
la figure 7 est une vue schématique en coupe transversale suivant le plan VII-VII de la figure 6 de l'unité de pose multidirectionnelle montrant une gorge de ce profilé à l'entrée de laquelle est positionné un moyen de centrage de cette unité,
la figure 8 est une vue schématique en coupe transversale suivant le plan VIII-VIII de la figure 6 de cette gorge du profilé au-dessus de laquelle est positionné l'un des deux galets presseurs de cette unité de pose multidirectionnelle,
la figure 9 est une vue schématique de dessus d'un palonnier portant les galets presseurs que comporte l'unité de pose multidirectionnelle et qui est monté coulissant sur le chariot portant cette unité,
la figure 10 est une vue de détail en perspective latérale des deux unités de pose verticale de l'installation selon l'invention visible à la figure 2 entre lesquelles est disposé un profilé à équiper, et
la figure 11 est une vue partielle en perspective arrière de l'une des deux unités de pose verticale de la figure 10 dans le cas d'une pose par dessus appliquée sur un profilé.

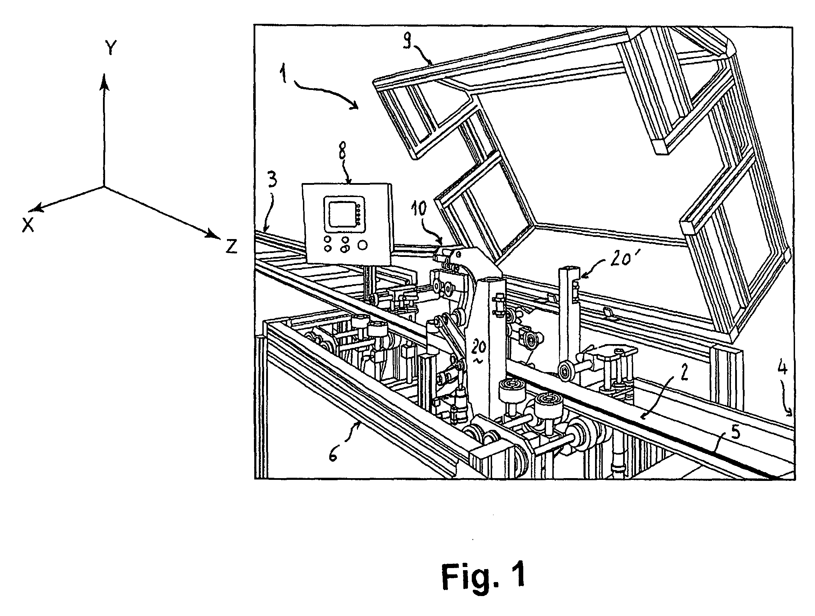

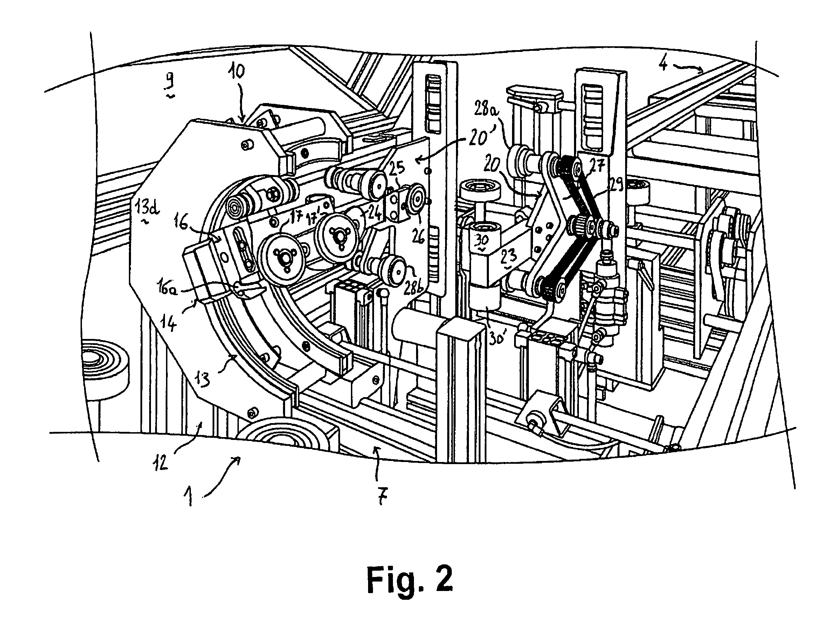

L'installation 1 de pose en reprise selon l'invention illustrée aux figures 1 et 2 est autonome, en ce sens qu'elle est apte à équiper des profilés 2 acheminés dans la direction horizontale Z (longitudinale pour les profilés 2) par un convoyeur amont 3 indépendamment de l'installation d'extrusion de ces profilés 2. Est visible à la figure 1 un convoyeur aval 4 destiné à évacuer chaque profilé équipé de la ou des garnitures d'étanchéité 5 en sa ou ses gorges réceptrices 2a, étant précisé que cette installation 1 permet l'insertion simultanée de trois garnitures d'étanchéité 5 respectivement par une unité de pose multidirectionnelle 10 et par deux unités identiques de pose verticale 20 et 20'.

L'installation 1 comprend essentiellement un dispositif de stockage et de dévidage (non illustré) de tourets ou bobines de grande capacité sur lesquels sont disposés les garnitures 2, et un bâti central 6 recevant les unités de pose 10 et 20, 20' via deux poutres transversales 7 respectivement destinées à recevoir l'unité 10 et les unités 20 et 20'. Dans ce dispositif de stockage et de dévidage, les tourets à dévider sont chargés sur un réceptacle à roulettes disposé en dessous du convoyeur amont 3 de sorte que l'axe de chaque touret soit vertical. Sont également visibles à la figure 1, d'une part, un automate programmable 8 permettant de programmer et de gérer dans le temps chaque cycle d'opérations de pose à effectuer pour ces trois unités 10 et 20, 20' et, d'autre part, un capot pivotant 9 destiné à recouvrir ces dernières.

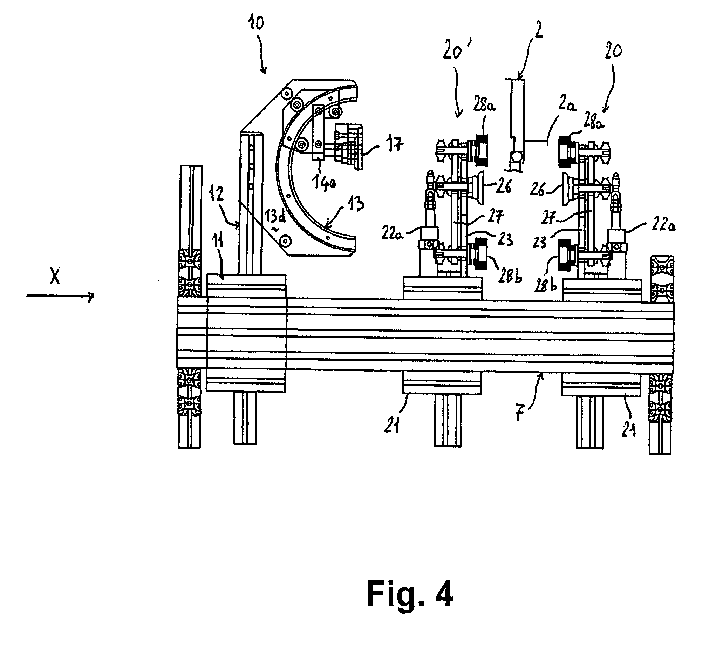

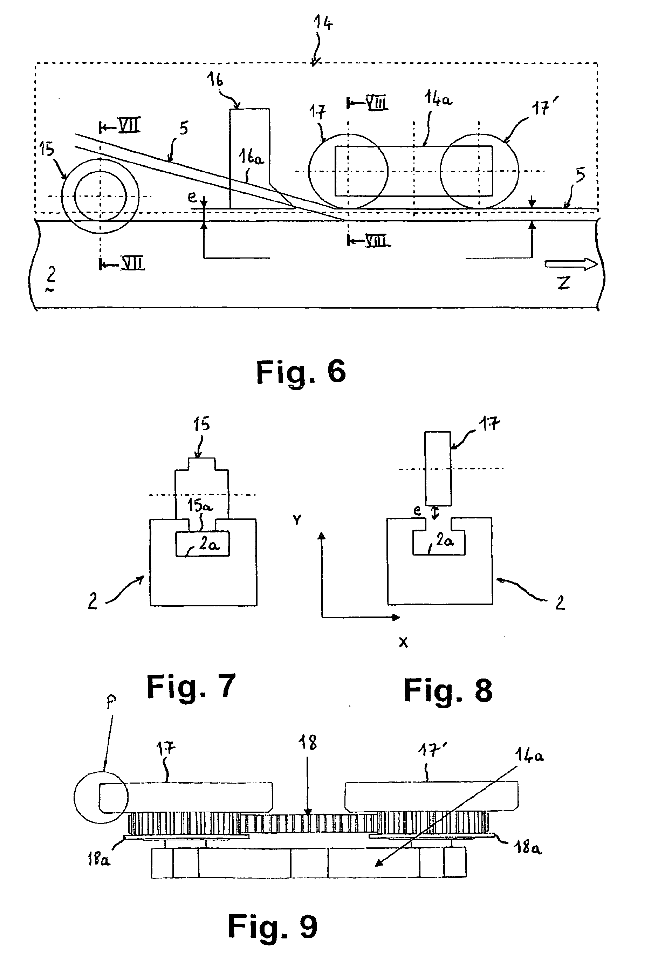

Comme illustré aux figures 2 à 9, l'unité de pose multidirectionnelle 10, qui est agencée en amont des deux unités de pose verticale 20 et 20', comporte essentiellement un chariot 11 qui est monté mobile sur l'une des deux poutres 7 selon une direction X horizontale transversale par rapport aux profilés 2 (cette direction X est ainsi perpendiculaire à la direction Z). Ce chariot 11 est pourvu d'une potence verticale 12 qui supporte à une hauteur réglable une coulisse courbe 13, sur laquelle est monté coulissant un support mobile de pose 14 portant à la fois, d'amont en aval :
- un galet ou sabot de centrage 15 (uniquement représenté aux figures 6 et 7) conçu pour pré-positionner transversalement l'insertion de la garniture 5 au droit de la gorge correspondante 2a du profilé 2 en garantissant automatiquement un clippage satisfaisant de cette garniture 5,
- un guide 16 de la garniture 5 vers la gorge 2a destinée à la recevoir qui définit un canal de passage 16a de cette garniture 5 débouchant sur la périphérie du galet presseur 17 adjacent, et
- un palonnier 14a portant deux galets presseurs 17 et 17' adjacents respectivement amont et aval qui sont conçus pour enfoncer la garniture 5 dans cette gorge 2a suite à ce centrage et à ce guidage et qui sont reliés entre eux par une courroie crantée 18 montée sur des poulies 18a (voir figure 9).

Grâce au support 14 qui les porte et qui est ainsi monté coulissant sur le chariot 11, le galet ou sabot de centrage 15, le guide 16 et les galets presseurs 17 et 17' évoluent chacun dans un plan transversal (i.e. perpendiculaire à la direction Z) lors du déplacement du chariot 11 et sont réglables manuellement dans la direction verticale Y via la potence 12, dans une position transversale donnée de ce chariot 11.

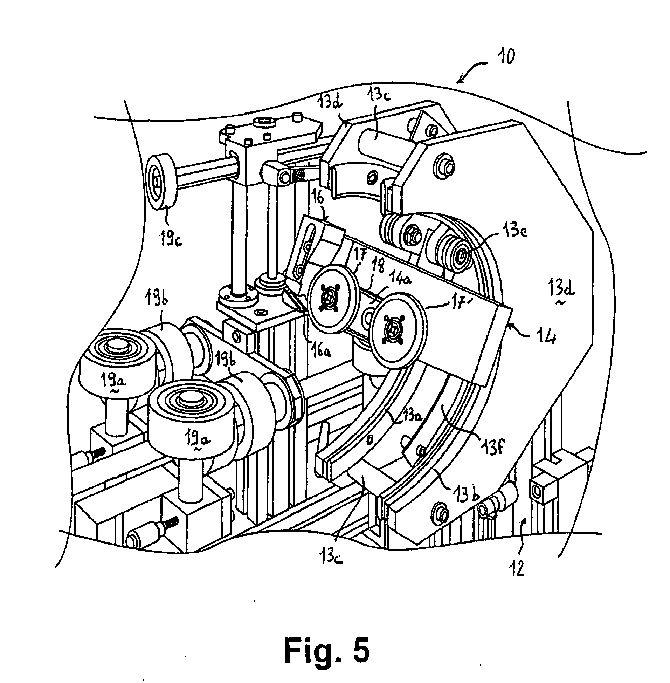

Plus précisément, la coulisse courbe 13 de l'unité de pose 10 est dans cet exemple de réalisation (voir notamment figure 5) formée de deux demi-couronnes 13a et 13b de guidage de préférence continu reliées entre elles par des entretoises 13c et fixées sur des flasques externes 13d, lesquels sont eux-mêmes fixés à la potence 12. Quant au support coulissant 14, il est monté sur ces demi-couronnes 13a et 13b par l'intermédiaire de deux trains 13e de galets de guidage (un seul train est visible à la figure 5). De plus, cette coulisse courbe 13 est pourvue de moyens de blocage pour bloquer en position le coulissement du support 14, qui sont dans cet exemple constitués d'un étrier serrant un flasque interne 13f situé entre les flasques externes 13d. On notera que l'on pourrait prévoir en variante pour ces moyens de blocage des butées, des crans, des pions ou similaires aptes à bloquer le support 14 dans des positions angulaires prédéterminées qui sont les plus fréquentes pour poser les garnitures 5 (par exemple selon des angles de 15°, 30° et 45°).

On voit en outre à la figure 5, disposés latéralement en vis-à-vis de cette coulisse 13 :
- deux galets de positionnement transversal 19a de chaque profilé 2 qui sont tous deux montés sur des axes verticaux et qui sont mobiles selon les directions X et Y, et
- deux galets d'entraînement 19b de chaque profilé 2 qui sont tous deux montés sur des axes horizontaux selon la direction X et qui sont destinés à entrer en contact avec chaque profilé 2 par en dessous et, en amont de ces galets 19a et 19b,
- un galet supérieur d'appui 19c sur chaque profilé qui est monté sur un axe horizontal selon la direction X et qui est mobile selon les directions X et Y de sorte à plaquer chaque profilé 2 vers le bas en direction des galets d'entraînement 19b.

Comme illustré aux figures 6 et 7, le moyen de centrage est de préférence constitué d'un galet de centrage 15 qui est conçu pour évoluer, à l'instar du guide 16 et des galets presseurs 17 et 17', en formant un angle variable avec la direction verticale Y dans une position donnée du chariot 11, du fait du coulissement du support 14 sur un demi-cercle formé par la coulisse 13. Il en résulte que cette unité de pose 10 est apte à insérer la garniture correspondante 5 suivant une direction de pose réglable s'écartant de la direction verticale selon un angle variable par exemple compris entre 0° (direction de pose verticale) et 90° (direction de pose horizontale). En d'autres termes, les axes respectifs du galet de centrage 15 et de chaque galet presseur 17, 17' peuvent alors s'écarter de cette direction X dans une position donnée du chariot 11.

On voit à la figure 6 que le jeu e entre chaque profilé 2 à équiper et l'ensemble guide 16 - galets presseurs 17 et 17' surmontant ce profilé 2 est prédéterminé par le dimensionnel du galet de centrage 15 en fonction de la géométrie de la garniture 5. Ainsi, l'opérateur n'a aucun réglage à faire et la reproductibilité du positionnement de l'unité de pose 10 est toujours garantie.

On voit à la figure 7 que ce galet de centrage 15 est épaulé sur sa périphérie avantageusement sous la forme d'un double épaulement formé par une nervure centrale circonférentielle 15a, de sorte que le positionnement manuel de ce galet 15 permet de positionner précisément à la fois dans les directions X et Y le guide 16 et les galets presseurs 17 et 17' sur la gorge 2a de chaque profilé 2.

On voit à la figure 8 que les galets presseurs 17 et 17', qui sont alignés en amont avec le galet de centrage 15 et le guide 16 dans la direction Z de sorte à se situer dans l'axe longitudinal de la gorge réceptrice 2a, sont ainsi précisément centrés au droit de cette gorge 2a. De plus, la géométrie de leur surface périphérique P peut être adaptée en fonction des caractéristiques dimensionnelles, géométriques et/ou de matériau de la garniture 5 utilisée.

Comme illustré à la figure 9, le galet presseur amont ou d'entrée 17 (qui est situé immédiatement en aval du guide 16) est entraîné par la courroie crantée 18 à une vitesse périphérique toujours supérieure à celle du galet aval ou de sortie 17' et selon un rapport de démultiplication qui est fixe ou bien adapté à la garniture 5 utilisée, ce qui permet de ne pas générer d'allongement de cette garniture 5 dû à l'effort de clippage dans la gorge 2a correspondante.

On notera que le blocage en position de travail de l'unité de pose 10 est avantageusement effectué à l'aide d'un dispositif de blocage asservi par voie pneumatique (non illustré).

L'unité de pose 10 est par ailleurs pourvue d'une poignée pour sa préhension, et elle est suspendue sur des amortisseurs pneumatiques à gaz, en vue de faciliter sa manipulation et de son positionnement par un opérateur (cette poignée et ces amortisseurs ne sont pas non plus illustrés).

Entre cette unité de pose multidirectionnelle 10 et chacune des deux unités de pose verticale 20, 20' sont agencés deux paires de galets de guidage supérieur 30 et inférieur 30' montés pour chaque paire sur des axes verticaux alignés dans la direction Y et qui sont respectivement destinés à guider chaque profilé 2 vers l'unité 20 posant une seconde garniture 5 par exemple par-dessus et vers l'autre unité 20' posant une troisième garniture 5 par exemple par-dessous.

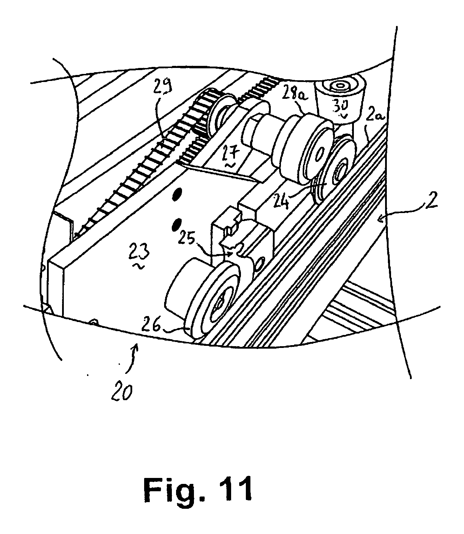

Les figures 2, 10 et 11 montrent la structure et le fonctionnement de chacune des deux unités de pose verticale 20, 20', qui sont symétriques l'une de l'autre par rapport à un plan longitudinal médian de l'installation 1 en étant agencées latéralement de part et d'autre de chaque profilé 2 (voir la figure 11 montrant une seule de ces unités 20 pour une pose par-dessus).

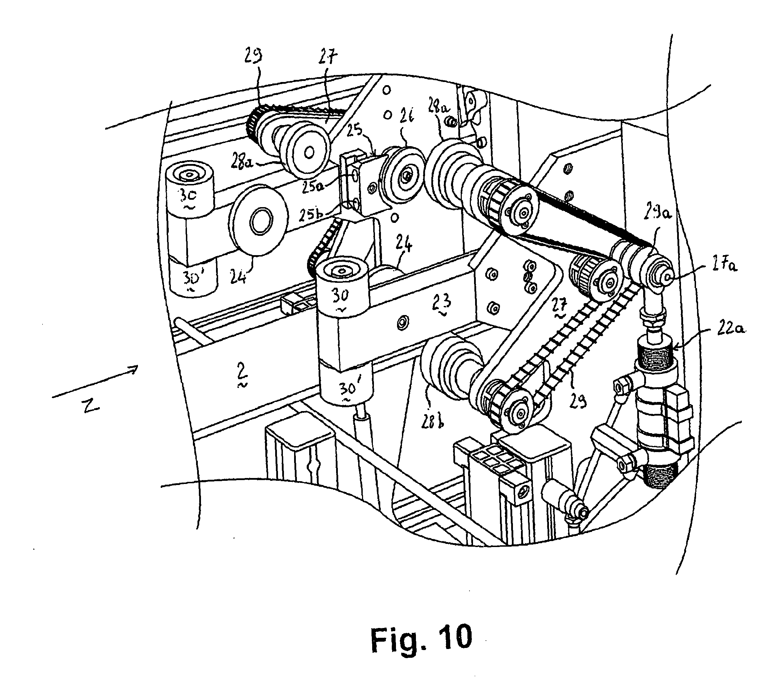

Chaque unité de pose verticale 20, 20', qui est conçue pour insérer la garniture 5 correspondante suivant une direction d'insertion verticale ascendante ou descendante, est suspendue par un amortisseur pneumatique et comporte essentiellement un chariot 21 qui est monté mobile dans la direction X sur l'autre poutre 7 (ce positionnement transversal pouvant être réalisé manuellement par l'opérateur) et qui est pourvu d'une potence verticale 22 qui supporte à une hauteur réglable un support de pose 23 portant à la fois, d'amont en aval (voir notamment les figures 10 et 11) :
- un galet de centrage 24 d'axe horizontal conçu pour pré-positionner transversalement l'insertion de la garniture 5 au droit de la gorge correspondante 2a du profilé 2 en garantissant automatiquement un clippage satisfaisant de cette garniture 5,
- un guide double 25 de la garniture 5 vers la gorge 2a destinée à la recevoir qui définit deux canaux de passage 25a et 25b de cette garniture 5 qui débouchent chacun sur la périphérie du galet presseur 26 adjacent et qui sont respectivement destinés à recevoir une garniture 5 à insérer au choix sur ou sous chaque profilé 2, et
- ce galet presseur 26 également d'axe horizontal qui est conçu pour enfoncer la garniture 5 dans cette gorge 2a suite à ce centrage et à ce guidage et qui est aligné dans la direction Z avec le galet de centrage 24 et avec ce guide double 25.

Chaque unité de pose verticale 20, 20' comporte en outre un palonnier 27 en forme de « V » ou de boomerang monté pivotant par sa pointe en un pivot 27a sensiblement coaxial dans la direction X avec l'axe du galet presseur 26, ce palonnier 27 portant aux extrémités de ses deux branches deux galets de mesure supérieur 28a et inférieur 28b qui sont respectivement destinés à être actionnés en contact avec la face supérieure ou inférieure de chaque profilé 2 (respectivement dans le cas d'une pose par-dessus ou par-dessous), par pivotement de ce palonnier 27 sur ce pivot 27a. Ce pivotement est actionné par le vérin pneumatique 22a jusqu'à ce que le galet de mesure utilisé 28a ou 28b soit en contact avec le profilé 2 selon une pression constante.

Chacun de ces galets de mesure 28a, 28b, de type revêtu, est destiné à mesurer la vitesse d'avancement de chaque profilé 2 et à entraîner en réponse le galet presseur 26 par l'intermédiaire d'une courroie crantée 29, d'un tendeur 29a équipant le palonnier 27 en sa pointe et d'un système de poulies, selon un rapport de démultiplication pour ce galet presseur 26 adapté pour ne pas générer d'allongement intempestif de la garniture 5 dû à l'effort de clippage de cette dernière dans la gorge 2a.

En référence aux trois unités de pose 10, 20 et 20' qui viennent d'être décrites, chacune de ces unités 10, 20, 20' est en outre pourvue d'un dispositif de coupe automatique des garnitures 5.

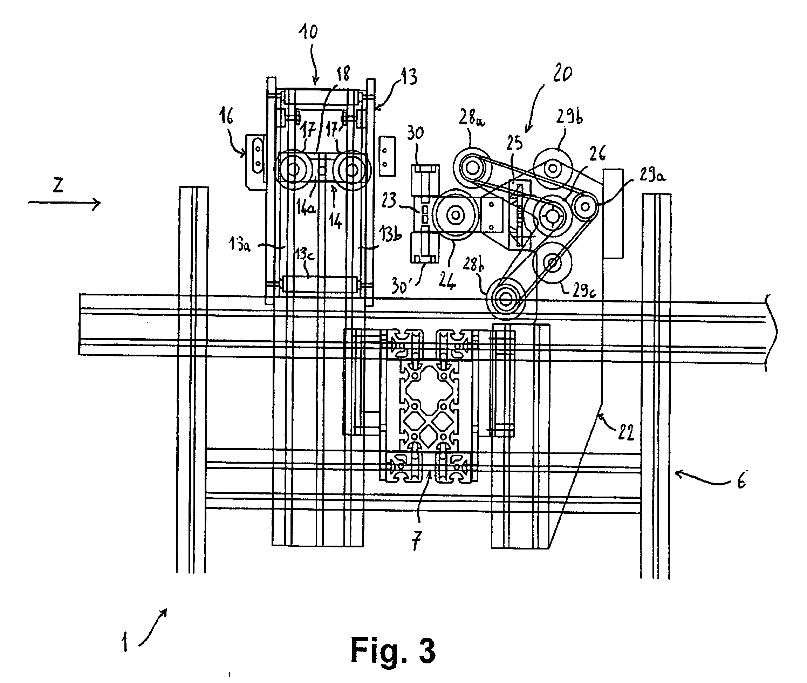

A titre optionnel, on peut prévoir en outre dans chaque unité de pose 20, 20' deux contre-galets supérieur 29b et inférieur 29c (voir figure 3) d'axes horizontaux respectivement pour une pose par-dessus ou par-dessous, chaque contre-galet 29b, 29c étant conçu pour s'opposer à la pression de clippage du galet presseur 26 et à l'effort développé par le vérin pneumatique équipant cette unité 20, 20'.

On notera que le guide double 25 de chaque unité de pose 20, 20' permet d'utiliser des sens de dévidage opposés de la garniture d'étanchéité 5 guidée, et en outre de dévriller et de reformater le cas échéant cette garniture 5.

On notera également que le blocage en position de travail de chaque unité de pose verticale 20, 20' est avantageusement effectué à l'aide d'un dispositif de blocage (non illustré) asservi par voie pneumatique, et que chaque unité 20, 20' est par ailleurs munie d'une poignée pour sa préhension.

D'une manière générale en référence à l'installation 1 selon l'invention qui vient d'être décrite, celle-ci présente optionnellement en outre :
- un dispositif d'alimentation automatique des profilés 2 en amont,
- un dispositif automatique d'évacuation et de stockage des profilés 2 équipés en aval, et
- un dispositif de motorisation des dévidoirs à tourets.

Enfin, on peut noter que l'installation 1 selon l'invention présente les avantages suivants, en plus de ceux précités :
- elle permet le clippage de garnitures d'étanchéité 5 monomatériaux ou multimatériaux tant élastomères que thermoplastiques très souples, avec un module d'élasticité à 100 % inférieur ou égal à 2 MPa ;
- le pilotage de l'installation 1 est possible par un seul opérateur ;
- la vitesse de clippage de chaque garniture 5 peut être supérieure à 20 m/min.;
- chaque profilé 2 est guidé et soutenu très précisément ;
- l'intensité de la force d'appui appliquée sous les garnitures 5 est fixe, du fait qu'elle est déterminée par la différence de diamètre entre le galet de centrage 15 ou 24 et le ou chaque galet presseur 17, 17' ou 26, garantissant ainsi un clippage optimisé et régulier ;
- cette installation 1 simplifie la tâche de l'opérateur de par son ergonomie (notamment via le chargement précité des tourets sur le réceptacle mobile en dessous du convoyeur amont 3) et la simplicité des commandes pour le pilotage des opérations via l'automate programmable 8 ; et
- elle permet une pose totalement fiable des garnitures 5 (avantageusement au nombre de trois pour chaque profilé 2).

## Revendications

1. Installation (1) de pose en reprise d'une ou plusieurs garnitures d'étanchéité (5) sur des profilés (2) présentant chacun une ou plusieurs gorges réceptrices (2a) respectivement destinées à recevoir la ou les garnitures, l'installation comprenant :
- des convoyeurs amont (3) et aval (4) respectivement destinés à acheminer dans une direction horizontale Z chaque profilé à équiper de la ou des garnitures et chaque profilé ainsi équipé,
- des moyens d'acheminement aptes à diriger dans ladite direction Z la ou chaque garniture vers chaque profilé à équiper, et
- au moins une unité de pose (10, 20, 20') de la ou de l'une des garnitures sur chaque profilé qui est agencée entre les convoyeurs amont et aval et qui comprend :
* des moyens d'enfoncement (17, 17', 26) de la garniture correspondante dans la gorge de chaque profilé, et
* des moyens de guidage (16, 25) de la garniture correspondante vers ces moyens d'enfoncement en amont desquels ils sont agencés,
**caractérisée en ce que** ladite au moins une unité de pose comprend un chariot (11, 21) qui est mobile selon une direction X horizontale transversale perpendiculaire à ladite direction Z, ce chariot portant à la fois lesdits moyens de guidage, lesdits moyens d'enfoncement et des moyens de centrage transversal (15, 24) agencés en amont des moyens de guidage et conçus pour positionner automatiquement ces moyens dé guidage et d'enfoncement au droit de la gorge correspondante de chaque profilé.

2. Installation (1) selon la revendication 1, **caractérisée en ce que**, dans ladite au moins une unité de pose (10, 20, 20'), lesdits moyens d'enfoncement comportent au moins un galet presseur (17, 17', 26), **en ce que** lesdits moyens de guidage (16, 25) définissent au moins un canal de passage (16a, 25a, 25b) pour la garniture correspondante (5) débouchant sur la périphérie (P) de ce galet presseur (17, 26) et **en ce que** lesdits moyens de centrage comportent un galet ou sabot de centrage (15, 24), ces moyens d'enfoncement (17, 17', 26), de guidage (16, 25) et de centrage (15, 24) étant chacun conçus pour évoluer dans un plan perpendiculaire à ladite direction Z lors du déplacement dudit chariot (11, 21) et étant réglables dans la direction verticale Y dans une position transversale donnée de ce chariot.

3. Installation (1) selon la revendication 2, **caractérisée en ce que**, dans ladite au moins une unité de pose (10), lesdits axes respectifs dudit au moins un galet presseur (17, 17') et dudit galet de centrage (15) sont montés mobiles sur ledit chariot (11) en étant aptes à former différents angles avec la direction horizontale transversale X dans une position fixe donnée de ce chariot, cette unité de pose étant ainsi multidirectionnelle en étant apte à insérer la garniture correspondante (5) suivant une direction d'insertion réglable s'écartant de la direction verticale selon un angle variable par exemple compris entre 0° et 90°.

4. Installation (1) selon la revendication 3, **caractérisée en ce que**, dans ladite unité de pose multidirectionnelle (10), ledit au moins un galet presseur (17, 7'), lesdits moyens de guidage (16) et ledit galet de centrage (15) sont solidaires d'un support (14) monté coulissant sur une coulisse courbe (13) dudit chariot (11), de telle sorte que lesdits axes basculent lors du coulissement de ce support suivant des angles variant progressivement par rapport à ladite direction X.

5. Installation (1) selon la revendication 4, **caractérisée en ce que** ladite coulisse (13) comprend deux guides (13a et 13b) en arc de cercle juxtaposés dans ladite direction Z de manière concentrique et définissant ensemble une piste curviligne sur laquelle ledit support coulissant (14) est guidé de préférence de manière continue par l'intermédiaire d'au moins un train de galets de guidage (13e) dont il est pourvu.

6. Installation (1) selon la revendication 4 ou 5, **caractérisée en ce que**, dans ladite unité de pose multidirectionnelle (10), ledit chariot (11) supporte une potence (12) qui est mobile en translation verticale dans ladite direction Y et qui porte ladite coulisse (13), ce chariot étant monté mobile en translation dans ladite direction X sur une poutre (7) transversale à ladite direction Z.

7. Installation (1) selon la revendication 5 ou 6, **caractérisée en ce que** ledit support coulissant (14) est pourvu, à titre de moyens d'enfoncement, de deux galets presseurs (17 et 17') respectivement amont et aval par rapport à ladite direction Z qui sont reliés entre eux par une courroie crantée (18) montée sur des poulies (18a) solidaires en rotation de ces galets, de telle sorte que le galet presseur amont (17) soit entraîné à une vitesse périphérique supérieure à celle du galet presseur aval (17') selon un rapport de démultiplication adapté ne générant pas d'allongement de la garniture (5) dû à l'effort d'enfoncement de cette dernière dans la gorge (2a).

8. Installation (1) selon une des revendications 3 à 7, **caractérisée en ce qu'**elle comporte en outre, en vis-à-vis de ladite unité de pose multidirectionnelle (10) :
- des galets d'entraînement (19b) de chaque profilé (2) dans ladite direction Z qui présentent des axes horizontaux parallèles à ladite direction X,
- des galets de positionnement transversal (19a) de chaque profilé qui sont mobiles dans ladite direction X et qui présentent des axes verticaux, et
- au moins un galet d'appui (19c) qui est agencé en amont dudit chariot (11) pour plaquer chaque profilé vers lesdits galets d'entraînement et qui présente un axe horizontal parallèle à ladite direction X, ce galet d'appui étant mobile dans lesdites directions X et Y.

9. Installation (1) selon une des revendications 3 à 8, **caractérisée en ce qu'**elle comporte, en plus de ladite unité de pose multidirectionnelle (10), au moins une autre unité de pose verticale (20, 20') d'une autre des garnitures (5) sur une autre gorge (2a) de chaque même profilé (2) à équiper, ladite ou chaque unité de pose verticale étant montée sur un autre chariot (21) mobile dans ladite direction transversale X et étant conçue pour insérer la garniture correspondante suivant une direction d'insertion verticale Y, et **en ce que** de préférence ladite ou chaque unité de pose verticale (20, 20') est suspendue sur un amortisseur par exemple pneumatique pour la positionner à la hauteur souhaitée dans la direction verticale.

10. Installation (1) selon la revendication 9, **caractérisée en ce que**, dans ladite ou chaque unité de pose verticale (20, 20'), lesdits moyens de guidage (25) définissent deux canaux de passage (25a et 25b) pour une garniture (5) à insérer respectivement sur ou sous chaque profilé (2), chaque canal étant sensiblement aligné dans ladite direction Z avec ledit galet de centrage (24) en amont et avec ledit galet presseur (26) en aval.

11. Installation (1) selon la revendication 9 ou 10, **caractérisée en ce que** ladite ou chaque unité de pose verticale (20, 20') comporte en outre des moyens de mesure et de transmission (27, 28a, 28b, 29) pour mesurer la vitesse d'avancement de chaque profilé (2) y défilant et pour transmettre en réponse audit galet presseur (26) un mouvement de rotation selon un rapport de démultiplication adapté de sorte à ne pas générer d'allongement intempestif de la garniture (5) dû à l'effort d'enfoncement de cette dernière dans la gorge (2a).

12. Installation (1) selon la revendication 11, **caractérisée en ce que** lesdits moyens de mesure et de transmission (27, 28a, 28b, 29) comportent un palonnier (27) en forme de « V » monté pivotant par sa pointe en un pivot (27a) sensiblement coaxial dans ladite direction transversale X avec l'axe dudit galet presseur (26), ce palonnier portant aux extrémités de ses deux branches deux galets de mesure supérieur (28a) et inférieur (28b) qui sont respectivement destinés à être actionnés en contact avec le dessus ou le dessous de chaque profilé (2), respectivement dans le cas d'une pose par-dessus ou par dessous, par pivotement de ce palonnier sur ce pivot et qui sont aptes à mesurer la vitesse d'avancement de chaque profilé et à entraîner en réponse ledit galet presseur par l'intermédiaire d'une courroie crantée (29) et d'un tendeur (29a) équipant ce palonnier.

13. Installation (1) selon une des revendications 9 à 12, **caractérisée en ce qu'**elle comporte, en plus de ladite unité de pose multidirectionnelle (10), deux desdites unités identiques de pose verticale (20 et 20') qui sont conçues pour être disposées transversalement de part et d'autre de chaque profilé (2) à équiper, de telle sorte que ces trois unités de pose soient aptes à insérer simultanément trois garnitures (5) dans trois gorges respectives (2a) de chaque profilé, deux de ces garnitures étant posées verticalement et la troisième selon un angle donné avec la direction verticale qui est compris entre 0° et 90°.

14. Procédé de pose en reprise d'une ou plusieurs garnitures d'étanchéité (5) sur des profilés (2) présentant chacun une ou plusieurs gorges réceptrices (2a) respectivement destinées à recevoir la ou les garnitures, lesquelles ont de préférence un module d'élasticité à 100 % inférieur ou égal à 2 MPa, ce procédé comprenant :
- un convoyage des profilés à équiper de la ou des garnitures et des profilés ainsi équipés dans une direction horizontale Z,
- un acheminement de la ou chaque garniture vers chaque profilé à équiper Z, et
- une pose de la ou de l'une des garnitures sur chaque profilé par un guidage puis un enfoncement de la garniture correspondante dans la gorge de chaque profilé,
**caractérisé en ce que** l'on positionne au moins une unité de pose selon une direction horizontale transversale X perpendiculaire à ladite direction Z, puis **en ce que** l'on réalise avant ce guidage un centrage transversal de la pose pour que ce guidage puis cet enfoncement soient effectués automatiquement au droit de la gorge correspondante de chaque profilé.

15. Procédé de pose en reprise selon la revendication 14, **caractérisé en ce qu'**il consiste à utiliser une installation (1) selon une des revendications 3 à 14 pour réaliser une insertion automatique de l'une au moins de ces garnitures (5) selon une direction de pose sensiblement horizontale ou oblique qui s'écarte de la direction verticale d'un angle réglable, et **en ce que** de préférence l'on insère simultanément trois garnitures (5) dans trois gorges respectives (2a) de chaque profilé (2), deux de ces garnitures étant posées verticalement respectivement par-dessus et par-dessous et la troisième garniture étant posée latéralement selon ledit angle réglable avec la direction verticale.

## Claims

1. Installation (1) for fitting one or more sealing gaskets (5) on profiled bars (2), each having one or more receiving grooves (2a) designed respectively to receive the gasket or gaskets, which installation comprises:
- upstream (3) and downstream (4) conveyors respectively configured to feed each profiled bar to be fitted with the gasket or gaskets and each profiled bar thus fitted in a horizontal direction Z,
- feeding means designed to guide the or each gasket in said direction Z towards each profiled bar to be fitted, and
- at least one unit (10, 20, 20') which is disposed between the upstream and downstream conveyors for fitting the or one of the gaskets on each profiled bar and which comprises:
- means (17, 17', 26) for inserting the corresponding gasket in the groove of each profiled bar, and
- means (16, 25) for guiding the corresponding gasket towards these inserting means upstream of which they are disposed,
**characterised in that** said at least one fitting unit comprises a carriage (11, 21) which is displaceable in a transverse horizontal direction X perpendicular to said direction Z, which carriage bears both said guiding means, said inserting means and transverse centring means (15, 24) disposed upstream of said guiding means and designed to automatically position these guiding and inserting means in alignment with the corresponding groove of each profiled bar.

2. Installation (1) as claimed in claim 1, **characterised in that**, in said at least one fitting unit (10, 20, 20'), said inserting means comprise at least one pressing roller (17, 17', 26), **in that** said guiding means (16, 25) defines at least one passage duct (16a, 25a, 25b) for the corresponding gasket (5) opening onto the periphery (P) of this pressing roller (17, 26) and **in that** said centring means comprises a centring roller or shoe (15, 24), these inserting (17, 17', 26), guiding (16, 25) and centring (15, 24) means each being designed to move in a plane perpendicular to said direction Z when said carriage (11, 21) is being displaced and being adjustable in the vertical direction Y when this carriage is in a given transverse position.

3. Installation (1) as claimed in claim 2, **characterised in that**, in said at least one fitting unit (10), said respective shafts of said at least one pressing roller (17, 17') and said centring roller (15) are mounted so as to be displaceable on said carriage (11) and are configured to subtend different angles with the transverse horizontal direction X when this carriage is in a given fixed position, this fitting unit thus being multi-directional and designed to insert the corresponding gasket (5) in an adjustable insertion direction at an angle with respect to the vertical direction which may be varied for example between 0° and 90°.

4. Installation (1) as claimed in claim 3, **characterised in that**, in said multi-directional fitting unit (10), said at least one pressing roller (17, 17'), said guiding means (16) and said centring roller (15) are connected to a support (14) mounted so as to slide on a curved slide (13) of said carriage (11) so that said shafts tilt at progressively varying angles relative to said direction X during the sliding movement of this support.

5. Installation (1) as claimed in claim 4, **characterised in that** said slide (13) comprises two guides (13a and 13b) on a circle arc, juxtaposed in said direction Z in a concentric arrangement and together defining a curvilinear track on which said sliding support (14) is guided in a preferably continuous manner via at least one set of guide rollers (13e) with which it is provided.

6. Installation (1) as claimed in claim 4 or 5, **characterised in that**, in said multi-directional fitting unit (10), said carriage (11) supports an arm (12) which is displaceable in a vertical translating movement in said direction Y and which bears said slide (13), this carriage being mounted so as to be displaceable in translation in said direction X on a beam (7) disposed transversely to said direction Z.

7. Installation (1) as claimed in claim 5 or 6, **characterised in that**, as inserting means, said sliding support (14) is provided with two pressing rollers (17 and 17') respectively upstream and downstream relative to said direction Z which are linked to one another by means of a toothed drive belt (18) mounted on pulleys (18a) rotating in unison with these rollers, so that the upstream pressing roller (17) is driven at a peripheral speed greater than that of the downstream pressing roller (17') on the basis of a reduction ratio adapted so that it does not induce elongation of the gasket (5) due to the force applied to insert the latter in the groove (2a).

8. Installation (1) as claimed in one of claims 3 to 7, **characterised in that** it further comprises, facing said multi-directional fitting unit (10):
- rollers (19b) for driving each profiled bar (2) in said direction Z, which have horizontal shafts parallel with said direction X,
- rollers (19a) for transversely positioning each profiled bar, which are displaceable in said direction X and which have vertical shafts, and
- at least one support roller (19c) which is disposed upstream of said carriage (11) for pressing each profiled bar towards said driving rollers and which has a horizontal shaft parallel with said direction X, this supporting roller being displaceable in said directions X and Y.

9. Installation (1) as claimed in one of claims 3 to 8, **characterised in that**, in addition to said multi-directional fitting unit (10), it comprises at least one other unit (20, 20') for vertically fitting another one of the gaskets (5) in another groove (2a) of each same profiled bar (2) to be fitted, said or each vertical fitting unit being mounted on another carriage (21) displaceable in said transverse direction X and being designed to insert the corresponding gasket in a vertical insertion direction Y, and **in that** said or each vertical fitting unit (20, 20') is preferably suspended on a shock absorber for example pneumatic, to position it at the desired height in the vertical direction.

10. Installation (1) as claimed in claim 9, **characterised in that**, in said or each vertical fitting unit (20, 20'), said guiding means (25) define two feed passages (25a and 25b) for a gasket (5) to be inserted respectively on or under each profiled bar (2), each passage being substantially aligned in said direction Z with said upstream centring roller (24) and with said downstream pressing roller (26).

11. Installation (1) as claimed in claim 9 or 10, **characterised in that** said or each vertical fitting unit (20, 20') further comprises measuring and transmission means (27, 28a, 28b, 29) for measuring the feed speed of each profiled bar (2) passing through it and for transmitting to said pressing roller (26) in response a rotating movement based on a reduction ratio adapted so that it does not induce inopportune elongation of the gasket (5) due to the force of inserting the latter in the groove (2a).

12. Installation (1) as claimed in claim 11, **characterised in that** said measuring and transmission means (27, 28a, 28b, 29) comprise a V-shaped crossbar (27) mounted so as to pivot by its apex in a pivot (27a) substantially coaxial in said transverse direction X with the shaft of said pressing roller (26), this crossbar bearing at the ends of its two branches two top (28a) and bottom (28b) measuring rollers which are respectively designed to be activated in contact with the top or bottom of each profiled bar (2), respectively in the case of fitting from above or from below, by pivoting this crossbar on this pivot, and which are designed to measure the feed speed of each profiled bar and in response to drive said pressing roller via a toothed drive belt (29) and a tightener (29a) equipping this crossbar.

13. Installation (1) as claimed in one of claims 9 to 12, **characterised in that**, in addition to said multi-directional fitting unit (10), it further comprises two of said identical vertical fitting units (20 and 20'), which are designed to be disposed transversely on either side of each profiled bar (2) to be fitted so that these three fitting units are configured to insert three gaskets (5) simultaneously in three respective grooves (2a) of each profiled bar, two of these gaskets being fitted vertically and the third one at a given angle with respect to the vertical direction which is between 0° and 90°.

14. Method of fitting one or more sealing elements (5) on profiled bars (2), each having one or more receiving grooves (2a) respectively designed to receive the gasket or gaskets, the latter preferably having a modulus of elasticity at 100% less than or equal to 2 MPa, this method comprising:
- conveying the profiled bars to be fitted with the gasket or gaskets and the profiled bars thus fitted in a horizontal direction Z,
- feeding the or each gasket towards each profiled bar to be fitted, and
- fitting the or one of the gaskets on each profiled bar by means of a guiding movement followed by insertion of the corresponding gasket in the groove of each profiled bar,
**characterised in that** at least one fitting unit is positioned in a transverse horizontal direction X perpendicular to said direction Z, and then prior to effecting this guiding movement, **in that** the fitting is transversely centered so that this guiding movement followed by this inserting movement are effected automatically in alignment with the corresponding groove of each profiled bar.

15. Fitting method as claimed in claim 14, **characterised in that** it consists in using an installation (1) as claimed in one of claims 3 to 14 to effect an automatic insertion of at least one of these gaskets (5) in a substantially horizontal or oblique fitting direction which varies from the vertical direction by an adjustable angle, and **in that** preferably three gaskets (5) are inserted simultaneously in three respective grooves (2a) of each profiled bar (2), two of these gaskets being fitted vertically from above and from below respectively and the third gasket being fitted laterally from said angle which can be adjusted relative to the vertical direction.

## Patentansprüche

1. Anlage (1) zur fortgesetzten Verlegung einer oder mehrerer Dichtungspackungen (5) auf Profilteilen (2), die je eine oder mehrere Aufnahmerillen (2a) aufweisen, welche je dazu bestimmt sind, die Packung oder die Packungen aufzunehmen, wobei die Anlage enthält:
- vordere (3) und hintere (4) Förderbänder, die dazu bestimmt sind, jedes Profilteil, das mit der Packung oder den Packungen ausgestattet werden soll, bzw. jedes so ausgestattete Profilteil in einer waagrechten Richtung Z zu leiten,
- Leiteinrichtungen, die die oder jede Packung in der Richtung Z zu jedem auszustattenden Profilteil leiten können, und
- mindestens eine Verlegeeinheit (10, 20, 20') der Packung oder einer der Packungen auf jedem Profilteil, die zwischen den vorderen und hinteren Förderbändern angeordnet ist und enthält:
* Eindrückeinrichtungen (17, 17', 26) der entsprechenden Packung in die Rille jedes Profilteils, und
* Führungseinrichtungen (16, 25) der entsprechenden Packung zu diesen Eindrückeinrichtungen, vor denen sie angeordnet sind,
**dadurch gekennzeichnet, dass** die mindestens eine Verlegeeinheit einen Schlitten (11, 21) enthält, der in einer waagrechten Querrichtung X lotrecht zur Richtung Z beweglich ist, wobei dieser Schlitten gleichzeitig die Führungseinrichtungen, die Eindrückeinrichtungen und Querzentrierungseinrichtungen (15, 24) trägt, die vor den Führungseinrichtungen angeordnet und konzipiert sind, um diese Führungs- und Eindrückeinrichtungen automatisch im rechten Winkel vor der entsprechenden Rille jedes Profilteils zu positionieren.

2. Anlage (1) nach Anspruch 1, **dadurch gekennzeichnet, dass** in der mindestens eine Verlegeeinheit (10, 20, 20') die Eindrückeinrichtungen mindestens eine Andrückrolle (17, 17', 26) aufweisen, dass die Führungseinrichtungen (16, 25) mindestens einen Durchlasskanal (16a, 25a, 25b) für die entsprechende Packung (5) definieren, der am Umfang (P) dieser Andrückrolle (17, 26) mündet, und dass die Zentriereinrichtungen eine Zentrierrolle oder einen Zentrierschuh (15, 24) aufweisen, wobei diese Eindrück- (17, 17', 26), Führungs- (16, 25) und Zentriereinrichtungen (15, 24) je konzipiert sind, um sich bei der Verschiebung des Schlittens (11, 21) in einer Ebene lotrecht zur Richtung Z zu bewegen und in der senkrechten Richtung Y in einer gegebenen Querstellung dieses Schlittens einstellbar sind.

3. Anlage (1) nach Anspruch 2, **dadurch gekennzeichnet, dass** in der mindestens einen Verlegeeinheit (10) die Achsen der mindestens einen Andrückrolle (17, 17') bzw. der Zentrierrolle (15) beweglich auf den Schlitten (11) montiert sind, indem sie fähig sind, in einer gegebenen ortsfesten Stellung dieses Schlittens verschiedene Winkel mit der waagrechten Querrichtung X zu bilden, wobei diese Verlegeeinheit somit multidirektional ist, indem sie fähig ist, die entsprechende Packung (5) gemäß einer einstellbaren Einführrichtung einzuführen, die von der senkrechten Richtung gemäß einem variablen Winkel abweicht, der zum Beispiel zwischen 0° und 90° liegt.

4. Anlage (1) nach Anspruch 3, **dadurch gekennzeichnet, dass** in der multidirektionalen Verlegeeinheit (10) die mindestens eine Andrückrolle (17, 17'), die Führungseinrichtungen (16) und die Zentrierrolle (15) fest mit einem Träger (14) verbunden sind, der auf einer gekrümmten Gleitschiene (13) des Schlittens (11) gleitend montiert ist, so dass die Achsen beim Gleiten dieses Trägers gemäß Winkeln kippen, die bezüglich der Richtung X progressiv variieren.

5. Anlage (1) nach Anspruch 4, **dadurch gekennzeichnet, dass** die Gleitschiene (13) zwei kreisbogenförmige Führungen (13a und 13b) enthält, die in der Richtung Z konzentrisch nebeneinander angeordnet sind und zusammen eine gekrümmte Bahn definieren, auf der der gleitende Träger (14) vorzugsweise kontinuierlich mittels mindestens eines Satzes von Führungsrollen (13e) geführt wird, mit denen er versehen ist.

6. Anlage (1) nach Anspruch 4 oder 5, **dadurch gekennzeichnet, dass** in der multidirektionalen Verlegeeinheit (10) der Schlitten (11) einen Ausleger (12) trägt, der in der Richtung Y in senkrechter Translation beweglich ist und der die Gleitschiene (13) trägt, wobei dieser Schlitten in der Richtung X translationsbeweglich auf einen Balken (7) quer zu der Richtung Z montiert ist.

7. Anlage (1) nach Anspruch 5 oder 6, **dadurch gekennzeichnet, dass** der gleitende Träger (14) als Eindrückeinrichtungen mit zwei Andrückrollen (17 und 17') vorne bzw. hinten bezüglich der Richtung Z versehen ist, die durch einen Zahnriemen (18) miteinander verbunden sind, der auf Riemenscheiben (18a) montiert ist, die in Drehung fest so mit diesen Rollen verbunden sind, dass die vordere Andrückrolle (17) mit einer höheren Umfangsgeschwindigkeit angetrieben wird als diejenige der hinteren Andrückrolle (17'), gemäß einem geeigneten Übersetzungsverhältnis, das keine Längung der Packung (5) aufgrund der Eindrückkraft dieser letzteren in die Rille (2a) erzeugt.

8. Anlage (1) nach einem der Ansprüche 3 bis 7, **dadurch gekennzeichnet, dass** sie außerdem gegenüber der multidirektionalen Verlegeeinheit (10) aufweist:
- Antriebsrollen (19b) jedes Profilteils (2) in der Richtung Z, die waagrechte Achsen parallel zu der Richtung X aufweisen,
- Querpositionierungsrollen (19a) jedes Profilteils, die in der Richtung X beweglich sind und senkrechte Achsen aufweisen, und
- mindestens eine Anlegerolle (19c), die vor dem Schlitten (11) angeordnet ist, um jedes Profilteil zu den Antriebsrollen zu drücken, und die eine waagrechte Achse parallel zur Richtung X aufweist, wobei diese Anlegerolle in den Richtungen X und Y beweglich ist.

9. Anlage (1) nach einem der Ansprüche 3 bis 8, **dadurch gekennzeichnet, dass** sie zusätzlich zu der multidirektionalen Verlegeeinheit (10) mindestens eine weitere senkrechte Verlegeeinheit (20, 20') einer anderen der Packungen (5) auf einer anderen Rille (2a) jedes gleichen auszustattenden Profilteils (2) aufweist, wobei die oder jede senkrechte Verlegeeinheit auf einen anderen in der Querrichtung X beweglichen Schlitten (21) montiert und konzipiert ist, um die entsprechende Packung gemäß einer senkrechten Einführrichtung Y einzuführen, und dass vorzugsweise die oder jede senkrechte Verlegeeinheit (20, 20') an einem zum Beispiel pneumatischen Dämpfer aufgehängt ist, um sie in der gewünschten Höhe in senkrechter Richtung zu positionieren.

10. Anlage (1) nach Anspruch 9, **dadurch gekennzeichnet, dass** in der oder jeder senkrechten Verlegeeinheit (20, 20') die Führungseinrichtungen (25) zwei Durchlasskanäle (25a und 25b) für eine Packung (5) definieren, die auf bzw. unter jedem Profilteil (2) einzuführen ist, wobei jeder Kanal im Wesentlichen in der Richtung Z mit der Zentrierrolle (24) vorne und mit der Andrückrolle (26) hinten ausgerichtet ist.

11. Anlage (1) nach Anspruch 9 oder 10, **dadurch gekennzeichnet, dass** die oder jede senkrechte Verlegeeinheit (20, 20') außerdem Mess- und Übertragungseinrichtungen (27, 28a, 28b, 29) aufweist, um die Vorschubgeschwindigkeit jedes dort vorbeilaufenden Profilteils (2) zu messen, und um als Reaktion an die Andrückrolle (26) eine Drehbewegung gemäß einem geeigneten Übersetzungsverhältnis zu übertragen, um keine unerwünschte Längung der Packung (5) aufgrund der Eindrückkraft dieser letzteren in die Rille (2a) zu erzeugen.

12. Anlage (1) nach Anspruch 11, **dadurch gekennzeichnet, dass** die Mess- und Übertragungseinrichtungen (27, 28a, 28b, 29) einen V-förmigen Schwinghebel (27) aufweisen, der mit seiner Spitze schwenkbar an einem Drehzapfen (27a) montiert ist, der in der Querrichtung X im Wesentlichen koaxial zur Achse der Andrückrolle (26) ist, wobei dieser Schwinghebel an den Enden seiner zwei Schenkel zwei Messrollen trägt, eine obere (28a) und eine untere (28b), die dazu bestimmt sind, in Kontakt mit der Oberseite bzw. der Unterseite jedes Profilteils (2) betätigt zu werden, jeweils im Fall einer Verlegung darüber oder darunter, durch Schwenken dieses Schwinghebels um diesen Drehzapfen, und die in der Lage sind, die Vorschubgeschwindigkeit jedes Profilteils zu messen und als Reaktion die Andrückrolle mittels eines Zahnriemens (29) und eines Spanners (29a) anzutreiben, die diesen Schwinghebel bestücken.

13. Anlage (1) nach einem der Ansprüche 9 bis 12, **dadurch gekennzeichnet, dass** sie zusätzlich zu der multidirektionalen Verlegeeinheit (10) zwei der gleichen Einheiten zur senkrechten Verlegung (20 und 20') aufweist, die konzipiert sind, um quer zu beiden Seiten jedes zu bestückenden Profilteils (2) angeordnet zu werden, damit diese drei Verlegeeinheiten gleichzeitig drei Packungen (5) in drei jeweilige Rillen (2a) jedes Profilteils einführen können, wobei zwei dieser Packungen senkrecht verlegt werden und die dritte gemäß einem gegebenen Winkel zur senkrechten Richtung verlegt wird, der zwischen 0° und 90° liegt.

14. Verfahren zum fortgesetzten Verlegen einer oder mehrerer Dichtungspackungen (5) auf Profilteilen (2), die je eine oder mehrere Aufnahmerillen (2a) aufweisen, die je dazu bestimmt sind, die Packung oder die Packungen aufzunehmen, die vorzugsweise einen Elastizitätsmodul bei 100 % geringer als oder gleich 2 MPa haben, wobei dieses Verfahren enthält:
- eine Beförderung der mit der Packung oder den Packungen zu bestückenden Profilteile und der so bestückten Profilteile in einer waagrechten Richtung Z,
- eine Leitung der oder jeder Packung zu jedem auszustattenden Profilteil, und
- ein Verlegen der oder einer der Packungen auf jedem Profilteil durch ein Führen und dann Eindrücken der entsprechenden Packung in die Rille jedes Profilteils, **dadurch gekennzeichnet, dass** mindestens eine Verlegeeinheit gemäß einer waagrechten Querrichtung X lotrecht zur Richtung Z positioniert wird, dass dann vor diesem Führen eine Querzentrierung des Verlegens durchgeführt wird, damit dieses Führen und dieses Eindrücken automatisch im rechten Winkel vor der entsprechenden Rille jedes Profilteils durchgeführt werden.

15. Verfahren zum fortgesetzten Verlegen nach Anspruch 14, **dadurch gekennzeichnet, dass** es darin besteht, eine Anlage (1) nach einem der Ansprüche 3 bis 14 zu verwenden, um ein automatisches Einfügen der mindestens einen dieser Packungen (5) gemäß einer im Wesentlichen waagrechten oder schrägen Verlegerichtung durchzuführen, die von der senkrechten Richtung um einen einstellbaren Winkel abweicht, und dass vorzugsweise gleichzeitig drei Packungen (5) in drei jeweilige Rillen (2a) jedes Profilteils (2) eingeführt werden, wobei zwei dieser Packungen senkrecht jeweils darüber bzw. darunter verlegt werden und die dritte Packung seitlich gemäß dem einstellbaren Winkel mit der senkrechten Richtung verlegt wird.
